# EUROPEAN PATENT APPLICATION

(11) **EP 4 644 750 A1**
(43) Date of publication of application: **05.11.2025**
(21) Application number: 24738572.7
(22) Date of filing: 05.01.2024
(51) Int. Cl.: F16L 3/10

(54) **PIPE CLAMP, PIPING SYSTEM, AND AIR CONDITIONER**

(30) Priority: 05.01.2023 CN 202320066141 U; 06.02.2023 CN 202320124034 U
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: ZHONG, Min, Foshan, Guangdong 528311 (CN); GUO, Jun, Foshan, Guangdong 528311 (CN); WU, Yandong, Foshan, Guangdong 528311 (CN); ZHI, Kaiyun, Foshan, Guangdong 528311 (CN); ZHOU, Baisong, Foshan, Guangdong 528311 (CN); LIANG, Hao, Foshan, Guangdong 528311 (CN)
(74) Representative: RGTH
(86) International application number: PCT/CN2024/070907
(87) International publication number: WO 2024/146641

(57) **Abstract**

Provided are a pipe clamp, a piping system including the pipe clamp, and an air conditioner. The piping clamp (100) is used for the piping system of the air conditioner. The pipe clamp (100) includes a pipe clamp body (110) having a plurality of clamping grooves (111) arranged side by side. The clamping groove (111) extends through two opposite sides of the pipe clamp body (110) to be adapted to a pipe (200). The clamping groove (111) has an opening (112) at a side of the clamping groove (111). The opening (112) has a width smaller than an outer diameter of the pipe (200). The opening (112) has an adjustable opening size. The opening (112) is adapted to allow the pipe (200) to be clamped into the clamping groove (111) via the opening (112). The use of the pipe clamp to connect a plurality of pipes eliminates operation steps of cutting and tightening a cable tie, which improves assembly efficiency and mounting consistency of the pipe.

## Description

### CROSS-REFERENCE TO RELATED APPLICATIONS

This application claims priorities to Chinese patent application No. 202320066141.8, titled "PIPE CLAMP, PIPING SYSTEM, AND AIR CONDITIONER" and filed with China National Intellectual Property Administration on January 05, 2023, and Chinese patent application No. 202320124034.6, titled "PIPE CLAMP, PIPING SYSTEM, AND AIR CONDITIONER" and filed with China National Intellectual Property Administration on February 06, 2023, the entire contents of which are incorporated herein by reference.

### FIELD

The present disclosure relates to the field air conditioner technologies, and more particularly, to a pipe clamp, a piping system, and an air conditioner.

### BACKGROUND

At present, the use of household appliances such as air conditioners has become more and more common. Since the air conditioner needs to transport airflow through pipes, the air conditioner has a piping system composed of many pipelines.

According to statistics, in a production and assembly process of the air conditioner, assembly of the piping system of the air conditioner is time-consuming. Time-consuming mounting of a rubber block on the pipe is one of the main reasons. A common way to mount the rubber block is usually to fix the rubber block with a cable tie, and assembly of the cable tie is divided into three steps: placing, tying, and cutting. A whole process is time-consuming, which is the reason for low efficiency of mounting the rubber block. In addition, tightness of the cable tie varies due to strength difference of operators, which also affects reliability of a product.

### SUMMARY

Main object of the present disclosure is to provide a pipe clamp, a piping system, and an air conditioner. A plurality of pipes are connected by using a pipe clamp, and the pipes are adapted to be clamped into clamping grooves of the pipe clamp, in such a manner that load of each pipe connected to the pipe clamp can be increased, vibration of the pipe can be reduced, and operation steps of cutting and tightening a cable tie can be omitted. As a result, efficiency of assembling a rubber block and the pipe can be improved, and consistency of mounting the rubber block can be improved.

To achieve the above-described object, a first aspect of the present disclosure provides a pipe clamp for a piping system of an air conditioner. The pipe clamp comprises a pipe clamp body having a plurality of clamping grooves arranged side by side. The clamping groove extends through two opposite sides of the pipe clamp body to be adapted to a pipe. The clamping groove has an opening at a side of the clamping groove. The opening has a width smaller than an outer diameter of the pipe. The opening has an adjustable opening size. The opening is adapted to allow the pipe to be clamped into the clamping groove via the opening.

With the pipe clamp of the present disclosure, the plurality of clamping grooves are provided to be connected to the plurality of pipes, in such a manner that not only the pipes are fixed, but also each pipe connected to the pipe clamp and the pipe clamp itself can be used as a counterweight member for other pipes connected to a same pipe clamp, increasing load of each pipe, and reducing the vibration of the pipe. Moreover, an engagement structure between the pipe clamp body and the pipe is simple, which is convenient for assembly and disassembly. In addition, compared with a solution in the related art in which a rubber block is separately provided for the pipe and the rubber block is tied to the pipe with a cable tie, a situation in which the rubber block cannot be stably connected to the pipe due to inconsistent opening and closing tightness of the opening of the rubber block caused by difference in strength of operators can be avoided. Mounting consistency of the pipe clamp can be improved, and the operation steps of cutting and tightening the cable tie are omitted, which can improve assembly efficiency of the pipe clamp and the pipe, save assembly time, and improve working reliability of a whole air conditioner.

According to some embodiments of the present disclosure, the plurality of clamping grooves are arranged at intervals in a length direction of the pipe clamp body. The openings of the plurality of clamping grooves are oriented in the same direction.

In some embodiments of the present disclosure, the pipe clamp body is provided with locking hooks on parts of the pipe clamp body at both sides of the opening of the clamping groove. The locking hooks extend in the direction that the opening is oriented. The pipe clamp further comprises a fixing plate having locking holes in one-to-one correspondence with the locking hooks. The fixing plate is disposed at a side of the pipe clamp body at which the opening is located to block the opening. The locking hooks is adapted to be inserted into a corresponding one of the locking holes.

In some embodiments, the pipe clamp further comprises a reinforcement frame. The reinforcement frame has a plurality of retaining rings and a connection segment located between two adjacent retaining rings in a length direction of the reinforcement frame. The connection segment is configured to connect the two adjacent retaining rings. The retaining ring are in one-to-one correspondence with the clamping groove. The retaining ring is adapted to a cross section of the clamping groove. The reinforcement frame is embedded in the pipe clamp body.

In some embodiments, the pipe clamp body has a mounting slot extending in a circumferential direction of the pipe clamp body. The mounting slot extends through a side wall of the pipe clamp body facing away from the clamping groove. The reinforcement frame is adapted to be inserted into the mounting slot.

In some embodiments, the pipe clamp body has a mounting slot at two end surfaces of the pipe clamp body in an axial direction of the pipe. The mounting slot extends along an edge of the pipe clamp body at a side of the pipe clamp body at which the opening is located. The two reinforcement frames are provided and respectively disposed in the corresponding mounting slots.

In some embodiments, the reinforcement frame is integrally injection-molded with the pipe clamp body. The reinforcement frame is located inside the pipe clamp body.

In some embodiments, the positioning hole is located at an outer surface of the pipe clamp body. The reinforcement frame is exposed within the positioning hole. The positioning hole is configured to position the reinforcement frame in an injection molding process.

In some embodiments, the positioning hole is formed on at least one end of the pipe clamp body in an axial direction of the pipe, and is aligned with the reinforcement frame in the axial direction of the pipe.

In some embodiments, the positioning hole extends through the pipe clamp body in the axial direction of the pipe.

According to some embodiments of the present disclosure, the pipe clamp body is a rubber member; and/or, the reinforcement frame is a metal member.

A second aspect of the present disclosure provides a piping system for an air conditioner. The piping system comprises a plurality of pipes and the pipe clamp according to the first aspect of the present disclosure. Each of the plurality of pipes is adapted to be clamped into a corresponding clamping groove of the pipe clamp body.

With the piping system of the present disclosure, by providing the pipe clamp in the above-described first aspect, the plurality of pipes can be stably connected to the pipe clamp, the load of each pipe is increased, and the vibration of the pipe during operation of the whole air conditioner is reduced. In this way, it is ensured that the pipe can be stably and reliably connected to different parts of the air conditioner. In addition, assembly operations are facilitated to be simplified, improving the assembly efficiency.

A third aspect of the present disclosure provides an air conditioner comprising the piping system according to the second aspect of the present disclosure

With the air conditioner of the present disclosure, by providing the piping system in the above-described second aspect, all components can be ensured to be stably connected. In addition, the efficiency of assembling the whole air conditioner can be improved, the assembly time and labor costs can be saved, and assembly consistency can be ensured.

### BRIEF DESCRIPTION OF THE DRAWINGS

In order to clearly explain technical solutions according to embodiments of the present disclosure or in the related art, drawings used in the description of the embodiments or the related art are briefly described below. Obviously, the drawings as described below are merely some embodiments of the present disclosure. Based on these drawings, other drawings can be obtained by those skilled in the art without creative effort.
FIG. 1 is a schematic structural view of a pipe clamp in some embodiments of the present disclosure, viewed from one perspective.
FIG. 2 is a schematic structural view of a pipe clamp in some embodiments of the present disclosure, viewed from another perspective.
FIG. 3 is a schematic structural view of a pipe clamp in some embodiments of the present disclosure.
FIG. 4 is an exploded view of a pipe clamp in some embodiments of the present disclosure.
FIG. 5 is a schematic structural view of a pipe clamp in some embodiments of the present disclosure.
FIG. 6 is an exploded view of a pipe clamp in some embodiments of the present disclosure.
FIG. 7 is a schematic structural view of a pipe clamp in some embodiments of the present disclosure.
FIG. 8 is an exploded view of a pipe clamp in some embodiments of the present disclosure.
FIG. 9 is a schematic structural view of a pipe clamp in some embodiments of the present disclosure, viewed from one perspective.
FIG. 10 is a schematic structural view of a pipe clamp in some embodiments of the present disclosure, viewed from another perspective.

Description of reference numerals of the accompanying drawings:
100-pipe clamp;
110-pipe clamp body; 111-clamping groove; 112-opening; 113-locking hook; 114-mounting slot; 115-positioning hole;
120-fixing plate;121-locking hole; 122-engagement portion;
130-reinforcement frame; 131-retaining ring; 132-connection segment;
200-pipe.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

At present, the use of household appliances such as air conditioners has become more and more common. Since the air conditioner needs to transport airflow through pipes, the air conditioner has a piping system composed of many pipelines.

According to statistics, in a production and assembly process of the air conditioner, assembly of a piping system of the air conditioner is time-consuming. Time-consuming mounting of a rubber block on the pipe is one of the main reasons. A common way to mount the rubber block is usually to fix the rubber block with a cable tie, and assembly of the cable tie is divided into three steps: placing, tying, and cutting. A whole process is time-consuming, which is the reason for low efficiency of mounting the rubber block. In addition, tightness of the cable tie varies due to strength difference of operators, which also affects reliability of a product.

In view of the above, a pipe clamp, a piping system, and an air conditioner are provided in the embodiments of the present disclosure. A plurality of pipes are connected by using the pipe clamp, and the pipes are adapted to be clamped into clamping grooves of the pipe clamp, in such a manner that load of each pipe connected to the pipe clamp can be increased, vibration of the pipe can be reduced, and operation steps of cutting and tightening the cable tie can be omitted. As a result, efficiency of assembling the rubber block and the pipe can be improved, and consistency of mounting the rubber block can be improved.

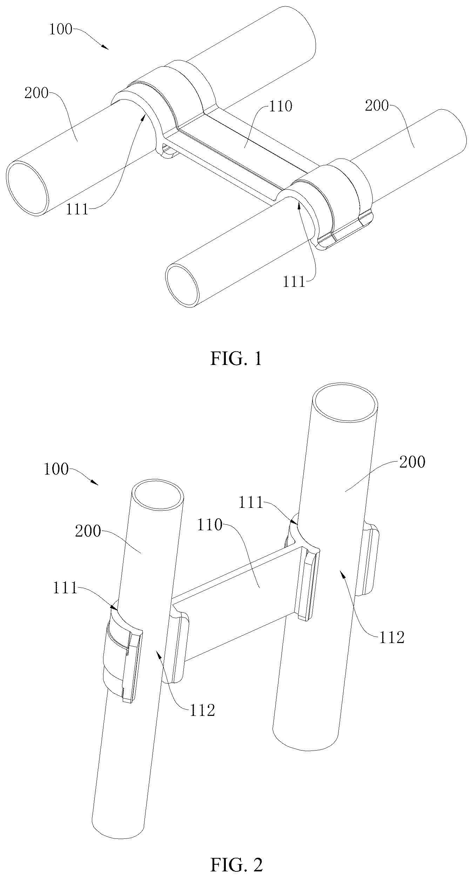

Hereinafter, a pipe clamp 100 according to an embodiment of a first aspect of the present disclosure is described with reference to FIG. 1 to FIG. 10.

As illustrated in FIG. 1, FIG. 3, FIG. 5, FIG. 7, and FIG. 9, the pipe clamp 100 according to an embodiment of the present disclosure can be used in the piping system of the air condition. In an exemplary embodiment of the present disclosure, the pipe clamp 100 may comprise a pipe clamp body 110.

In an exemplary embodiment of the present disclosure, the pipe clamp body 110 has a plurality of clamping grooves 111 arranged side by side and extending in the same direction. The clamping groove 111 can extend through two opposite sides of the pipe clamp body 110 to be adapted to a pipe 200. For example, the pipe clamp body 110 may be in a plate shape, in this case, the plurality of clamping grooves 111 may be formed by a partial structure, which extends along an arc, of the pipe clamp body 110 in a length direction of the pipe clamp body 110. Alternatively, the pipe clamp body 110 may be in a block shape, in this case, the plurality of clamping grooves 111 may be formed by an outer surface of the pipe clamp body 110 being recessed inwardly.

A cross section of the clamping groove 111 may be formed in an arc shape adapted to the pipe 200. The clamping groove 111 may be in an interference fit with the pipe 200 to ensure that the pipe 200 is stably connected to the pipe clamp 100 when the pipe 200 is clamped into the clamping groove 111. By providing the plurality of clamping grooves 111, the plurality of pipes 200 can be fixed by the pipe clamp body 110 simultaneously.

The clamping groove 111 has an opening 112 at a side of the clamping groove 111. A direction of the opening of each of the plurality of clamping grooves 111 is perpendicular to an axial direction of the pipe 200. In other words, the direction of the opening 112 of the clamping groove 111 may be parallel to a radial direction of the pipe 200, and the opening 112 has a width smaller than an outer diameter of the pipe 200. The opening 112 has an adjustable opening size. The pipe 200 is adapted to be clamped into the clamping groove 111 from the opening 112. In this way, when the pipe 200 is assembled with the pipe clamp body 110, the opening size of the opening 112 may be increased first to enable the pipe 200 to be smoothly clamped into the clamping groove 111, and then the pipe 200 may be clamped into the clamping groove 111 from the opening 112 in the radial direction.

With the pipe clamp 100 according to an embodiment of the present disclosure, the plurality of clamping grooves 111 are provided to be connected to the plurality of pipes 200, in such a manner that not only the pipes 200 are fixed, but also each pipe 200 connected to the pipe clamp 100 and the pipe clamp 100 itself can be used as a counterweight member for other pipes 200 connected to a same pipe clamp 100, increasing load of each pipe 200, and reducing the vibration of the pipe 200. Moreover, an engagement structure between the pipe clamp body 110 and the pipe 200 is simple, which is convenient for assembly and disassembly. In addition, compared with a solution in the related art in which a rubber block is separately provided for the pipe 200 and the rubber block is tied to the pipe 200 with a cable tie, a situation in which the rubber block cannot be stably connected to the pipe 200 due to inconsistent opening and closing tightness of an opening 112 of the rubber block caused by difference in strength of the operators can be avoided. Mounting consistency of the pipe clamp 100 can be improved, and the operation steps of cutting and tightening the cable tie are omitted, which can improve assembly efficiency of the pipe clamp 100 and the pipe 200, save assembly time, and improve working reliability of a whole air conditioner.

As illustrated in FIG. 1, FIG. 3, FIG. 5, FIG. 7, and FIG. 9, according to some embodiments of the present disclosure, the plurality of clamping grooves 111 are arranged at intervals in the length direction of the pipe clamp body 110, each of the plurality of clamping grooves 111 has an opening 112 in a width direction of pipe clamp body 110, and the openings 112 of the plurality of clamping grooves 111 are oriented in the same direction. In other words, the plurality of clamping grooves 111 may be located at a same side of the pipe clamp body 110 in the width direction, which helps to improve the assembly efficiency of the pipe 200 and the pipe clamp body 110, and can also prevent the plurality of pipes 200 from being easily disengaged from their respective clamping grooves 111 when subjected to external forces in different directions, improving assembly stability between the pipe 200 and the pipe clamp body 110.

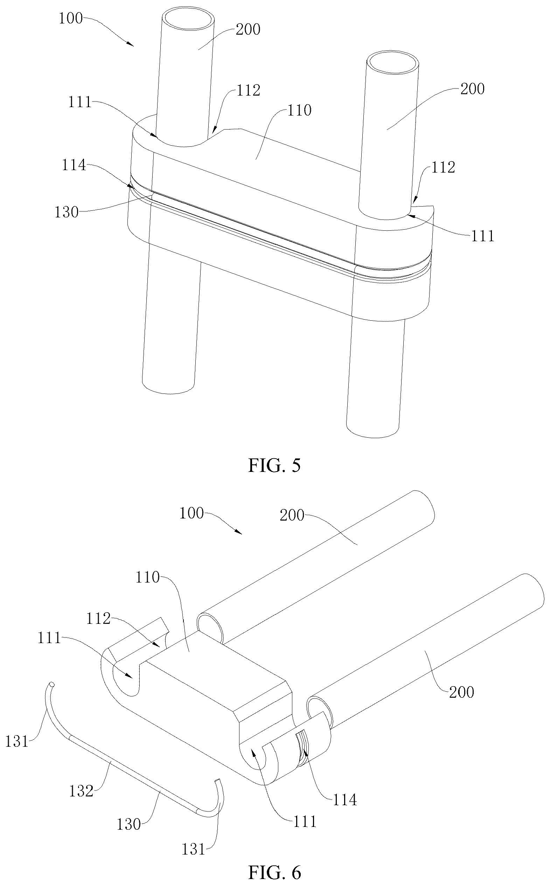

For example, as illustrated in FIG. 1, the pipe clamp body 110 is in a rectangular plate shape, and has two clamping grooves 111 respectively located at both ends of the pipe clamp body 110 in the length direction. The openings 112 of the two clamping grooves 111 face toward a same side of the pipe clamp body 110 in the width direction. Alternatively, for example, as illustrated in FIG. 5, the pipe clamp body 110 is in a block shape with an oblong cross section, and has the two clamping grooves 110 respectively located at both ends of an oblong block in a length direction. The openings 112 face toward a same side of the pipe clamp body 110 in the width direction.

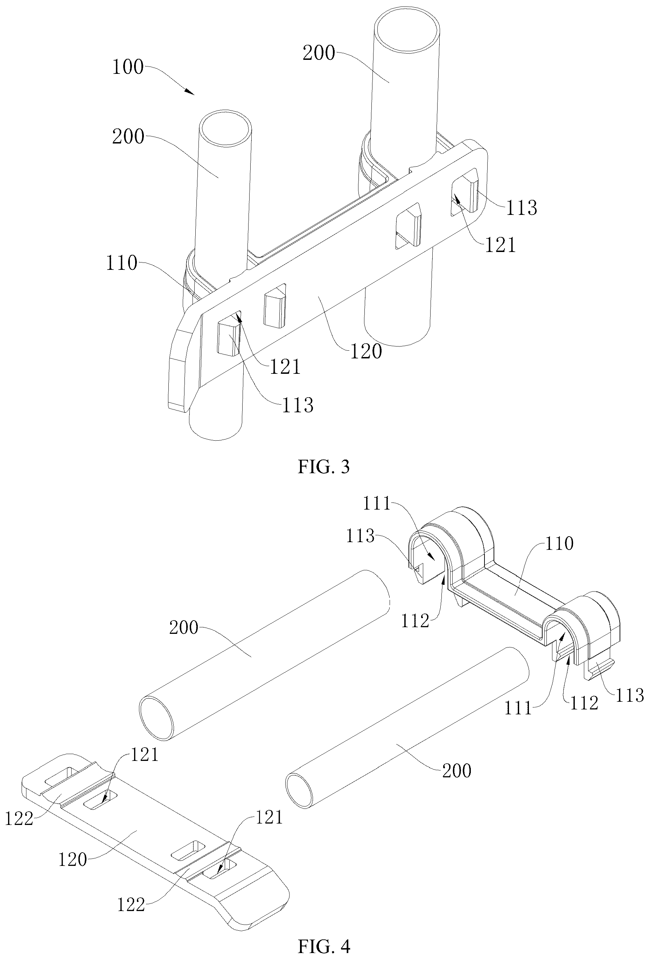

In some embodiments, as illustrated in FIG. 3 and FIG. 4, the pipe clamp body 110 is provided with locking hooks 113 on parts of the pipe clamp body 110 at both sides of the opening 112 of the clamping groove 111, the locking hooks 113 extend in an oriented direction of the opening 112. The pipe clamp 100 further comprises a fixing plate 120 having locking holes 121 in one-to-one correspondence with the locking hooks 113. The fixing plate 120 is disposed at a side of the pipe clamp body 110 at which the opening 112 is located to block the opening 112, and the locking hook 113 is adapted to be inserted into the corresponding locking hole 121. In this way, after the pipe 200 is clamped into the clamping groove 111, the fixing plate 120 can be connected to the pipe clamp body 110 by engagement between the locking hook 113 and the locking hole 121, and the fixing plate 120 is used to block the opening 112 of the clamping groove 111, further preventing the pipe 200 from being disengaged from the clamping groove 111, and improving engagement stability between the pipe 200 and the pipe clamp 100.

In some embodiments, as illustrated in FIG. 4, the fixing plate 120 is provided with an engagement portion 122 at a side of the fixing plate 120 facing the pipe 200. The engagement portion 122 may be formed by a protrusion from a surface of the side of the fixing plate 120 facing the pipe 200. A surface of the engagement portion 122 facing the pipe 200 is an engagement surface. The engagement surface is an arc surface adapted to the pipe 200. The engagement surface abuts against the pipe 200. In this way, connection stability between the pipe clamp 100 and the pipe 200 can be further improved.

In some embodiments, as illustrated in FIG. 5 to FIG. 10, the pipe clamp 100 further comprises a reinforcement frame 130. In an exemplary embodiment of the present disclosure, the reinforcement frame 130 has a plurality of retaining rings 131 and a plurality of connection segments 132 in a length direction of the reinforcement frame 130. Each of the plurality of connection segments 132 is located between two adjacent retaining rings 131. Each of the plurality of connection segments 132 is configured to connect the two adjacent retaining rings 131. The retaining rings 131 are in one-to-one correspondence with the clamping grooves 111. The retaining ring 131 is adapted to a cross section of the clamping groove 111. The reinforcement frame 130 is embedded in the pipe clamp body 110. In this way, by providing the reinforcement frame 130, strength and rigidity of the pipe clamp body 110 can be increased to ensure that the pipe clamp body 110 can stably clamp the plurality of pipes 200.

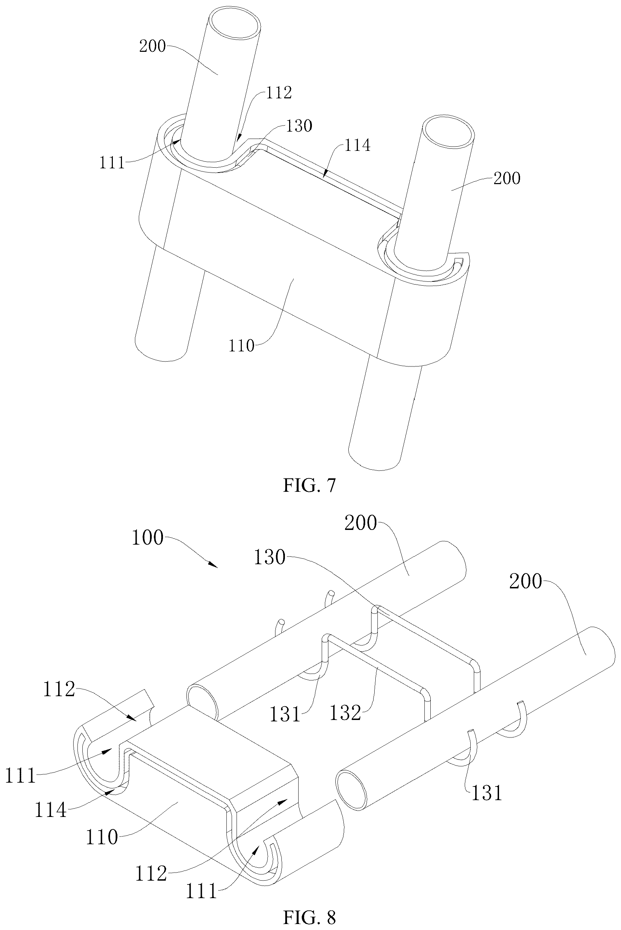

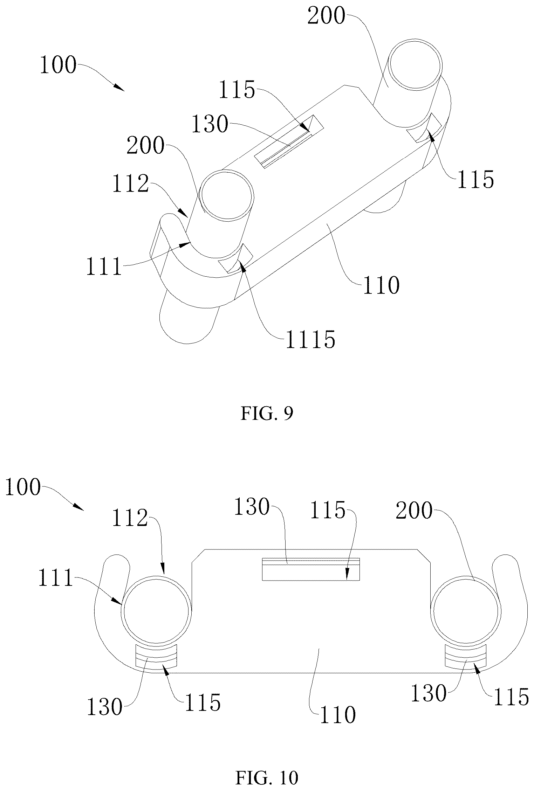

For example, as illustrated in FIG. 7 and FIG. 9, the reinforcement frame 130 may be formed as a metal wire or a metal plate. The reinforcement frame 130 has the retaining rings 131 at both ends of the reinforcement frame 130 in its own length direction. Each retaining ring 131 is in an arc shape adapted to the clamping groove 111. Moreover, the retaining ring 131 has a diameter greater than a diameter of the clamping groove 111, in such a manner that when the retaining ring 131 is embedded in the pipe clamp body 110, the retaining ring 131 can surround the clamping groove 111. One connection segment 132 is provided and the connection segment 132 is a straight segment. Both ends of the connection segments 132 are respectively connected to two retaining rings 131. The connection segment 132 is adapted to a portion of the pipe clamp body 110 located between the two clamping grooves 111. In this way, by providing the reinforcement frame 130, the strength and rigidity of the pipe clamp body 110 can be increased to ensure that the pipe clamp body 110 can stably clamp the plurality of pipes 200.

In some embodiments, as illustrated in FIG. 5 and FIG. 6, the pipe clamp body 110 has a mounting slot 114 extending in a circumferential direction of the pipe clamp body 110. The mounting slot 114 may extend through a side wall of the pipe clamp body 110 facing away from the opening 12 of the clamping groove 111. The reinforcement frame 130 is adapted to be inserted into the mounting slot 114. For example, as illustrated in FIG. 5, when the openings 112 of the clamping grooves 111 are all formed at a side wall, such as a left side wall, of the pipe clamp body 110 in the width direction, the mounting slot 114 can extend in the circumferential direction of the pipe clamp body 110 and extend through a right side wall of pipe clamp body 110. An extension direction of the mounting slot 114 is adapted to an extension direction of the reinforcement frame 130. In this way, the reinforcement frame 130 can be inserted into the mounting slot 114. With a simple structure, processing and assembly are facilitated

In other embodiments, as illustrated in FIG. 7 and FIG. 8, the pipe clamp body 110 has a mounting slot 114 at each of two end surfaces of the pipe clamp body 110 in the axial direction of the pipe 200. The mounting slot 114 may extend along an edge of the pipe clamp body 110 at a side of the pipe clamp body 110 at which the opening 112 is located. Two reinforcement frames 130 are provided and respectively disposed in the corresponding mounting slots 114. For example, a clamping opening of the clamping groove 111 may be formed at the left side wall of the pipe clamp body 110. The pipe clamp body 110 has the mounting slots 114 at an upper surface and a lower surface of the pipe clamp body 110. The mounting slot 114 at the upper surface of the pipe clamp body 110 may extend along a left edge of the upper surface, and the mounting slot 114 at the lower surface of the pipe clamp body 110 may extend along a left edge of the lower surface. In this way, the reinforcement frame 130 can be ensured to be adapted to the mounting slot 114. By providing the mounting slot 114 at each of the two end surfaces of the pipe clamp body 110 in the axial direction of the pipe 200, and by providing the reinforcement frame 130 in the corresponding mounting slot 114, an force applied by the reinforcement frame 130 to the pipe clamp body 110 can be more evenly distributed, ensuring that the pipe 200 is stably clamped in the clamping groove 111. In addition, with the simple structure, the processing and assembly are facilitated.

In other embodiments, as illustrated in FIG. 9 and FIG. 10, the reinforcement frame 130 is integrally injection-molded with the pipe clamp body 110. The reinforcement frame 130 is located inside the pipe clamp body 110. For example, during processing the pipe clamp 100, the reinforcement frame 130 may be positioned in a molding chamber first, and then raw material glue corresponding to the pipe clamp body 110 is injected into the molding chamber. At this time, the reinforcement frame 130 may be located inside the pipe clamp body 110. In this way, on the one hand, structural strength of the pipe clamp body 111 can be enhanced by using the reinforcement frame 130, and on the other hand, compared with a solution of embedding the reinforcement frame 130 in the mounting slot 114 at a surface of the pipe clamp body 110, the reinforcement frame 130 can be ensured not to fall off from the pipe clamp body 110, ensuring reliability of the pipe clamp 100.

In some embodiments, as illustrated in FIG. 9 and FIG.10, the pipe clamp body 110 has at least one positioning hole 115 located at an outer surface of the pipe clamp body 110. The reinforcement frame 130 is partially exposed within the positioning hole 115. The positioning hole 115 is configured to position the reinforcement frame 130 in an injection molding process to facilitate the processing and manufacturing of the pipe clamp 100. It should be understood that the number of the positioning holes 115 may correspond to the number of positioning members used to position the reinforcement frame 130 in a molding process of the pipe clamp 100. Also, a position of the positioning hole 115 in the pipe clamp body 110 also corresponds to a position of the positioning member relative to the reinforcement frame 130.

In some embodiments, as illustrated in FIG. 9 and FIG. 10, the positioning hole 115 is formed on at least one end of the pipe clamp body 110 in the axial direction of the pipe 200, and is aligned with the reinforcement frame 130 in the axial direction of the pipe 200. For example, the positioning hole 115 may be formed only at an upper end of the pipe clamp body 110, or the positioning hole 115 may be formed only at a lower end of the pipe clamp body 110, or the positioning hole 115 may be formed at each of the upper end and the lower end of the pipe clamp body 110. In this way, the reinforcement frame 130 can be easily positioned during the processing of the pipe clamp 100.

In some embodiments, the positioning hole 115 extends through the pipe clamp body 110 in the axial direction of the pipe 200. In this way, compared with a solution in which the positioning hole 115 is only provided at the end of the pipe clamp body 110 in the axial direction of the pipe 200, when the pipe clamp 100 is connected to the pipe 200 of an outdoor air conditioner, rainwater entering the positioning hole 115 may flow away directly, preventing the rainwater from accumulating in the positioning hole 115 and causing corrosion of the reinforcement frame 130.

According to some embodiments of the present disclosure, the pipe clamp body 110 is a rubber member. In this way, the pipe clamp body 110 has a certain elasticity, which is convenient for adjusting the opening size of the opening 112 of the clamping groove, facilitating the assembly of the pipe 200 and the pipe clamp 100. Of course, the present disclosure is not limited thereto, and the pipe clamp body 110 may also be an elastic member made of other materials.

In a specific example, the reinforcement frame 130 is a metal member. For example, the reinforcement frame 130 may be a steel wire or a steel strip. In this way, a cost is reduced, and the processing and molding is easy.

A piping system according to an embodiment of a second aspect of the present disclosure will be described below with reference to FIG. 1 to FIG. 10.

The second aspect of the present disclosure provides a piping system for an air conditioner. The piping system comprises a plurality of pipes 200 and the pipe clamp 100 according to the first aspect of the present disclosure. Each of the plurality of pipes 200 is adapted to be clamped into a corresponding clamping groove 111 of the pipe clamp body 110.

The piping system according to an embodiment of the present disclosure may be used in the air conditioner. The piping system may comprise a pipe 200 and the counterweight assembly in the above-described embodiments. The plurality of pipes 200 are provided, and each of the plurality of pipes 200 is adapted to be clamped into a corresponding clamping groove 111 of the pipe clamp 100.

With the piping system according to an embodiment of the present disclosure, by providing the pipe clamp 100 in the above-described embodiments, the plurality of pipes 200 can be stably connected to the pipe clamp 100, the load of each pipe 200 is increased, and the vibration of the pipe 200 during operation of the whole air conditioner is reduced. In this way, it is ensured that the pipe 200 can be stably and reliably connected to different parts of the air conditioner. In addition, assembly operations are facilitated to be simplified, improving the assembly efficiency.

An air conditioner according to an embodiment of a third aspect of the present disclosure is described below.

The air conditioner according to an embodiment of the present disclosure comprises the piping system in the above-described embodiments. For example, the air conditioner has an indoor unit, an outdoor unit, and a piping system. The pipes 200 in the piping system may be connected to the indoor unit and the outdoor unit. Of course, the present disclosure is not limited thereto. The piping system may only be a pipe 200 in the indoor unit; or the piping system may only be a pipe 200 in the outdoor unit.

With the air conditioner according to an embodiment of the present disclosure, by providing the piping system in the above-described embodiments, all components can be ensured to be stably connected. In addition, the efficiency of assembling the whole air conditioner can be improved, the assembly time and labor costs can be saved, and assembly consistency can be ensured.

In the description of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

In the present disclosure, unless otherwise clearly specified and limited, terms such as "install," "connect," "connect to," "fix," and the like should be understood in a broad sense. For example, it may be a fixed connection or a detachable connection or connection as one piece; mechanical connection or electrical connection or communication; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through another feature between them. Moreover, the first feature "above" the second feature means that the first feature is directly above or obliquely above the second feature, or simply means that the level of the first feature is higher than that of the second feature. The first feature "below" the second feature means that the first feature is directly below or obliquely below the second feature, or simply means that the level of the first feature is smaller than that of the second feature.

Reference throughout this specification to "an embodiment", "some embodiments", "an example", "a specific example", or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

## Claims

1. A pipe clamp (100) for a piping system of an air conditioner, the pipe clamp (100) comprising:
a pipe clamp body (110) having a plurality of clamping grooves (111) arranged side by side, wherein:
the clamping groove (111) extends through two opposite sides of the pipe clamp body (110) to be adapted to a pipe (200); and
the clamping groove (111) has an opening (112) at a side of the clamping groove (111), the opening (112) having a width smaller than an outer diameter of the pipe (200), the opening (112) having an adjustable opening size, and the opening (112) being adapted to allow the pipe (200) to be clamped into the clamping groove (111) via the opening (112).

2. The pipe clamp (100) according to claim 1, wherein:
the plurality of clamping grooves (111) are arranged at an interval in a length direction of the pipe clamp body (110); and
the openings (112) of the plurality of clamping grooves (111) are oriented in a same direction.

3. The pipe clamp (100) according to claim 2, wherein:
the pipe clamp body (110) is provided with locking hooks (113) on parts of the pipe clamp body (110) at both sides of the opening (112) of the clamping groove (111), the locking hooks (113) extending in the direction that the opening (112) is oriented; and
the pipe clamp (100) further comprises a fixing plate (120) having locking holes (121) in a one-to-one correspondence with the locking hooks (113), the fixing plate (120) being disposed at the side of the pipe clamp body (110) at which the opening (112) is located to block the opening (112), and the locking hooks (113) being adapted to be inserted into a corresponding one of the locking holes (121).

4. The pipe clamp (100) according to claim 2, further comprising a reinforcement frame (130), wherein:
the reinforcement frame (130) has a plurality of retaining rings (131) and a connection segment (132) located between two adjacent retaining rings (131) in a length direction of the reinforcement frame (130), the connection segment (132) being configured to connect the two adjacent retaining rings (131), the retaining ring (131) being in a one-to-one correspondence with the clamping groove (111), and the retaining ring (131) being adapted to a cross section of the clamping groove (111); and
the reinforcement frame (130) is embedded in the pipe clamp body (110).

5. The pipe clamp (100) according to claim 4, wherein the pipe clamp body (110) has a mounting slot (114) extending in a circumferential direction of the pipe clamp body (110), the mounting slot (114) extending through a side wall of the pipe clamp body (110) facing away from the clamping groove (111), and the reinforcement frame (130) being adapted to be inserted into the mounting slot (114).

6. The pipe clamp (100) according to claim 4, wherein:
the pipe clamp body (110) has a mounting slot (114) at two end surfaces of the pipe clamp body (110) in an axial direction of the pipe (200), the mounting slot (114) extending along an edge of the pipe clamp body (110) at a side of the pipe clamp body (110) at which the opening (112) is located; and
two reinforcement frames (130) are provided and respectively disposed in corresponding mounting slot (114).

7. The pipe clamp (100) according to claim 4, wherein:
the reinforcement frame (130) is integrally injection-molded with the pipe clamp body (110); and
the reinforcement frame (130) is located inside the pipe clamp body (110).

8. The pipe clamp (100) according to claim 7, wherein the pipe clamp body (110) has at least one positioning hole (115) located at an outer surface of the pipe clamp body (110), the reinforcement frame (130) being exposed within the positioning hole (115), and the positioning hole (115) being configured to position the reinforcement frame (130) in an injection molding process.

9. The pipe clamp (100) according to claim 8, wherein the positioning hole (115) is formed on at least one end of the pipe clamp body (110) in an axial direction of the pipe (200) and is aligned with the reinforcement frame (130) in the axial direction of the pipe (200).

10. The pipe clamp (100) according to claim 9, wherein the positioning hole (115) extends through the pipe clamp body (110) in the axial direction of the pipe (200).

11. The pipe clamp (100) according to any one of claims 4 to 10, wherein:
the pipe clamp body (110) is a rubber member; and/or
the reinforcement frame (130) is a metal member.

12. A piping system for an air conditioner, comprising:
a plurality of pipes (200); and
a pipe clamp (100) according to any one of claims 1 to 11, each of the plurality of pipes (200) being adapted to be clamped into a corresponding clamping groove (111) of a pipe clamp body (110).

13. An air conditioner, comprising the piping system according to claim 12, wherein a first predetermined value is greater than or equal to half of a thickness value of a delaminated positive electrode minus 10 µm, and less than or equal to half of the thickness value of the delaminated positive electrode minus 4 µm.
